Europäisches Patentamt

European Patent Office

Office européen des brevets

(11) Numéro de publication: **0 336 338 B1**

## FASCICULE DE BREVET EUROPEEN

(45) Date de publication de fascicule du brevet: **03.03.93** (51) Int. Cl.⁵: **G21C 7/36**, G21D 3/16

(21) Numéro de dépôt: **89105812.5**

(22) Date de dépôt: **03.04.89**

(54) **Procédé de détermination et d'évaluation de la capacité de retour en puissance d'un réacteur nucléaire à eau pressurisée.**

(30) Priorité: **05.04.88 FR 8804440**

(43) Date de publication de la demande:
**11.10.89 Bulletin 89/41**

(45) Mention de la délivrance du brevet:
**03.03.93 Bulletin 93/09**

(84) Etats contractants désignés:
**BE CH DE ES GB IT LI SE**

(56) Documents cités:
**EP-A- 0 010 036**
**EP-A- 0 051 542**
**EP-A- 0 097 488**
**EP-A- 0 102 068**
**FR-A- 2 395 572**

(73) Titulaire: **FRAMATOME**
**Tour Fiat 1, Place de la Coupole**
**F-92400 Courbevoie(FR)**

(72) Inventeur: **Girieud, Patrick**
**71, Rue Jean Baptiste Clément**
**F-92140 Clamart(FR)**

(74) Mandataire: **Weinmiller, Jürgen et al**
**Lennéstrasse 9 Postfach 24**
**W-8133 Feldafing (DE)**

## Description

La présente invention concerne la commande des centrales électro-nucléaires à eau pressurisée et, plus particulièrement, la détermination et l'évaluation de la capacité de retour rapide en puissance d'une telle centrale. Elle vise plus précisément une évaluation de la réactivité disponible par action sur les barres de contrôle, lorsque la centrale est à un niveau de puissance intermédiaire, en vue de la maintenir à un niveau suffisant pour permettre un retour rapide à la puissance nominale.

Les centrales nucléaires à eau pressurisée sont bien connues. Sommairement, elles comprennent un réacteur contenant, dans une cuve, des assemblages combustibles formés de crayons combustibles contenant le matériau fissile ; dans certains d'entre eux s'insèrent des crayons ou barres de contrôle mobiles contenant un matériau absorbant les neutrons. Les crayons de contrôle d'un assemblage combustible, commandés ensemble, forment une grappe de contrôle. Les assemblages combustibles sont plongés dans l'eau sous pression qui circule dans un circuit primaire possédant plusieurs boucles primaires incluant chacune, une pompe primaire et un générateur de vapeur. L'une de ces boucles comprend aussi un pressuriseur maintenant la pression d'eau dans le réacteur. L'eau sous pression sert de fluide modérateur et caloporteur. De plus, elle contient du bore en solution, matériau absorbant neutronique servant, de même que les grappes de contrôle, au pilotage (du fonctionnement) du réacteur.

Les générateurs de vapeur alimentent en vapeur un circuit secondaire comprenant, pour l'essentiel, une turbine entraînant un alternateur, un condenseur et des pompes.

La réactivité est une mesure de l'évolution de la réaction en chaîne au coeur du réacteur. Dans cette réaction en chaîne, les neutrons produits par la fission de noyaux lourds, ralentis par le modérateur qui est l'eau sous pression du circuit primaire, plus ou moins absorbés par les barres de contrôle et le bore en solution, viennent à leur tour provoquer de nouvelles fissions. Le facteur, appelé k, par lequel se trouve multiplié le nombre de fissions d'une génération à la suivante est généralement égal à 1. Il peut être temporairement supérieur à 1. On appelle réactivité l'écart positif de k par rapport à 1. Elle se chiffre en pcm (parties par cent mille). En présence d'une réactivité non nulle, la réaction en chaîne tend à croître. A d'autres moments, le facteur k peut être inférieur à 1, la réactivité est négative et l'on parle alors d'antiréactivité. Dans ce cas, la réaction tend à s'étouffer.

La puissance du réacteur est ajustée par action sur la réactivité, en fait par action sur la position des barres de contrôle et/ou sur la concentration en bore. Pour augmenter la puissance, on apporte une réactivité positive. La réaction s'accroît. La température augmente dans le réacteur et la densité de l'eau du circuit primaire décroît. Son effet modérateur diminue, ce qui équivaut à un apport d'antiréactivité, laquelle finalement équilibre la réactivité. Le réacteur se stabilise alors à un niveau de puissance augmenté. Pour diminuer la puissance on opère à l'inverse.

Le réacteur peut ainsi fournir la puissance thermique qui lui est demandée, généralement pour faire face aux besoins d'électricité du réseau auquel est couplée la centrale.

Dans les considérations qui gouvernent le choix entre les deux modes de pilotage d'un réacteur nucléaire, par les barres de contrôle ou le niveau du bore, il faut tout d'abord mentionner que, si l'action sur les barres de contrôle a des effets immédiats, l'action par le bore en solution est comparativement plus lente.

En outre, l'augmentation de la concentration du bore en solution, demande des moyens de stockage et d'injection d'acide borique, tandis que sa diminution demande des moyens de dilution et, surtout, de traitement et de stockage des effluents, moyens d'autant plus importants et coûteux que l'on aura plus souvent et plus longtemps recours à l'action par le bore en solution.

On tend ainsi à n'utiliser le bore en solution que pour corriger les effets à long terme sur la réactivité du fonctionnement du réacteur, c'est-à-dire essentiellement l'effet xénon et le vieillissement du combustible.

Le pilotage de la puissance thermique fournie par le réacteur pour répondre aux besoins du réseau électrique est ainsi de préférence effectué par les barres de contrôle. Mais l'insertion des barres de contrôle affecte, de façon préjudiciable, la distribution axiale de la puissance produite dans le réacteur. Il en résulte des inégalités de température dans le coeur du réacteur, avec notamment, une usure accélérée du combustible aux endroits les plus chauds et une production localisée de xénon, facteurs intervenant de façon restrictive dans la procédure de pilotage du réacteur et imposant un recours corrélatif à l'action sur le niveau du bore en solution.

Or, avec le développement de la part des centrales nucléaires dans la production totale d'électricité il est devenu nécessaire que les centrales nucléaires, initialement utilisées en centrales de base, à niveau de production quasi-constant, soit employées en suivi de charge, avec un niveau de production épousant une courbe journalière, et même en mode asservi, par téléréglage, le niveau de production se conformant à une courbe arbitraire, multipliant ainsi les actions de pilotage, avec les conséquences défavorables mentionnées

2

EP 0 336 338 B1

plus haut. On a donc recherché des procédés de pilotage par les barres de contrôle dans lesquels la distorsion de la distribution axiale de puissance serait réduite et ses effets préjudiciables limités.

Par ailleurs, pour pouvoir faire face aux besoins du réseau, il peut être nécessaire que la centrale ait une certaine capacité à retourner rapidement en puissance, lorsqu'elle fonctionne à puissance intermédiaire. Cette capacité ne peut être assurée que si, aux puissances intermédiaires, des groupes de barres de commande sont suffisamment insérés.

C'est ainsi qu'il est décrit, dans le brevet FR-A- 2 395 572, un procédé de conduite d'un réacteur nucléaire dans lequel, pour contrôler les effets de réactivité dus aux variations de puissance, on déplace, en fonction de la puissance demandée à la turbine uniquement, des groupes composés de grappes de matériau absorbant dont un au moins a une antiréactivité réduite, pour faire varier la puissance du réacteur, ainsi qu'un groupe, appelé groupe R, composé de grappes très absorbantes, en fonction de la différence existant à chaque instant entre la température moyenne du coeur du réacteur et une température de référence, qui est fonction du niveau de puissance demandé, l'action sur la concentration du bore en solution servant à maintenir le groupe R dans une certaine plage, en plus de corriger les effets à long terme de réactivité.

Le besoin du retour rapide en puissance est respecté dans le procédé de conduite du brevet n° 2 395 572 grâce au premier ensemble de barres de commande dont la position est définie par la puissance demandée à la turbine.

Plus tard, dans le brevet emoféen EP-A. 0051542 correspondant au brevet français FR-A. 2 493 582, on a décrit un procédé de conduite d'un réacteur nucléaire par déplacement conjugué, dans le coeur de ce réacteur, de groupes de barres de commande, de façon telle que les perturbations de la distribution axiale de puissance soient toujours limitées, ce qui permet d'éviter le recours au bore en solution, dont la concentration est alors ajustée seulement de manière à compenser les effets du dégagement de xénon et du vieillissement des crayons combustibles.

Dans ce procédé de conduite du EP.A. 0051542 la distinction entre groupes de contrôle de puissance et groupe de régulation de température R disparaît. La position des groupes de contrôle de puissance est continuellement variable suivant un programme complexe.

Dans le procédé de conduite du brevet EP.A. 0051542, le besoin de retour rapide en puissance ne sera par contre satisfait que dans la mesure où la réactivité que peuvent apporter les barres de commande présentes dans le coeur, par leur retrait, est suffisante pour permettre le retour en puissance désiré. Le contrôle de cette réactivité disponible servira à éviter, par exemple, une extraction des barres de commande sous l'effet de la régulation de la température moyenne, lorsque le niveau d'empoisonnement du coeur par le xénon augmente, par des actions sur la concentration en acide borique dans le coeur.

La présente invention a donc pour objet un procédé de détermination de la capacité de retour rapide en puissance dans les réacteurs à eau pressurisée qui convienne au procédé de conduite considéré en second et même, plus généralement, à tout procédé de conduite.

Le procédé de détermination et d'évaluation de la capacité de retour rapide en puissance d'un réacteur nucléaire à eau pressurisée de la présente invention consiste à calculer une puissance de reprise par l'application de la formule générale :

$$Prip = Prel + \Delta P,$$

dans laquelle Prip est la puissance de reprise maximale accessible par action sur les barres de contrôle, Prel est la puissance relative fournie par le coeur, déterminée par la mesure en ligne du flux neutronique émis par le coeur et $\Delta P$ est la puissance additionnelle résultant de la réactivité potentielle de l'ensemble des barres de contrôle du réacteur quand cet ensemble passe de l'insertion observée à l'insertion minimale, $\Delta P$ se calculant par l'application de la formule :

$$\Delta P = \frac{-EG - FP - FT + EG1}{AP},$$

dans laquelle EG est l'antiréactivité qui découle de la position mesurée des grappes de régulation de puissance, en faisant intervenir la distribution axiale de puissance mesurée et l'épuisement du coeur préalablement défini, FP est un premier terme correctif correspondant à l'effet de réactivité résultant de

3

l'erreur à la puissance réelle, telle qu'elle est mesurée, causée par la distorsion de la répartition de densité de l'eau dans le coeur du réacteur, qui est une fonction du deuxième degré de la distorsion axiale de puissance mesurée, FT est un deuxième terme correctif correspondant à l'effet de réactivité résultant de l'écart entre la température moyenne du coeur, qui est une grandeur mesurée, et la température de consigne, qui est une grandeur préétablie, EG1 est une constante d'échelle permetrant de prendre en compte le fait qu'il est nécessaire de conserver, à forte puissance, des barres insérées partiellement dans le coeur pour pouvoir contrôler la température et AP est un terme permettant de traduire en variations de puissance les effets calculés en termes de réactivité.

Le procédé conforme à l'invention prévoit encore que le premier terme correctif FP corresponde à l'effet de réactivité résultant de l'écart à la puissance réelle, telle qu'elle est mesurée, causé par la distorsion de la répartition de la densité de l'eau dans le coeur du réacteur, qui est une fonction du deuxième degré de la distorsion axiale de puissance mesurée, selon la formule :

$$FP = Prel\ (p3\ +\ p4.Ao\ +\ p5.Ao^2),$$

p3, p4 et p5 étant des coefficients de dimensionnement constants.

Le procédé conforme à l'invention prévoit enfin que le deuxième terme correctif FT corresponde à l'effet de réactivité résultant de l'écart entre la température moyenne du coeur, que est une grandeur mesurée, et la température de consigne, qui est une grandeur préétablie, selon la formule :

$$FT\ =\ p6\ (Tmoy\ -\ Tref),$$

p6 étant un coefficient constant et Tmoy étant la température moyenne du coeur du réacteur obtenue à partir des températures du circuit primaire à l'entrée et à la sortie du coeur.

L'invention inclut l'utilisation de la puissance de reprise pour provoquer une action corrective consistant à modifier le niveau du bore en solution dans le circuit primaire.

Les différents objets et caractéristiques de l'invention seront maintenant exposés de façon détaillée dans la description qui va suivre d'un exemple de mise en oeuvre de l'invention faite en se reportant au dessin annexé qui représente, de façon très schématique, une centrale nucléaire à eau pressurisée.

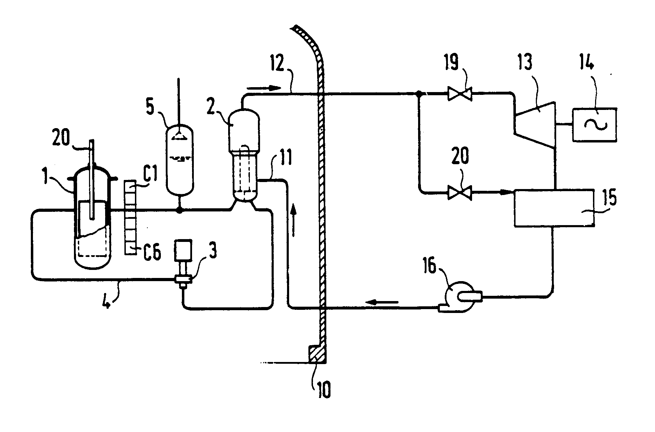

A la figure 1, le coeur d'un réacteur à eau pressurisée est représenté en 1, associé dans un circuit primaire 4 à un générateur de vapeur 2. Le mouvement de l'eau sous pression est forcé par une pompe primaire 3. Un pressuriseur 5 maintient le volume et la pression de l'eau dans le circuit primaire. Ces différents éléments sont disposés dans une enceinte 10 traversée par les conduites d'un circuit secondaire 12 branché sur le générateur de vapeur 2. Ce circuit secondaire 12 comprend une turbine 13, entraînant un alternateur 14, un condenseur 15 et une pompe secondaire 16. Des vannes 19 et 20 permettent le contournement de la turbine 13, pour maintenir le circuit secondaire dans un cas où l'entraînement de l'alternateur doit être interrompu.

Comme indiqué précédemment, le coeur du réacteur contient, dans une cuve, des assemblages combustibles formés de crayons combustibles contenant le matériau fissile ; dans certains d'entre eux s'insèrent des crayons ou barres de contrôle mobiles 20 contenant un matériau absorbant les neutrons. Les crayons de contrôle d'un assemblage combustible, commandés ensemble, forment une grappe de contrôle. Les assemblages combustibles sont plongés dans l'eau sous pression qui circule dans le circuit primaire 4, lequel possède en fait plusieurs boucles primaires dont une seule, celle qui est représentée à la figure inclut le pressuriseur 5. L'eau sous pression sert de fluide modérateur et caloporteur. De plus, elle contient du bore en solution, matériau absorbant neutronique servant, de même que les grappes de contrôle, au pilotage du fonctionnement du réacteur.

Les circuits d'injection de bore, sous forme d'acide borique, dans le circuit primaire 4, n'ont pas été représentés.

La figure indique enfin, en C1 à C6, des chambres à ionisation disposées auprès du réacteur, à l'extérieur de la cuve, pour la mesure du flux neutronique à différents niveaux de hauteur. En pratique, ces détecteurs sont composés de quatre détecteurs individuels par niveau, dont les signaux de sortie sont combinés pour fournir chacun un signal représentatif de la puissance instantanée émise par le réacteur au niveau correspondant.

Par ailleurs, on n'a pas représenté de dispositif de mesure et de détermination de diverses variables telles que la température en divers endroits du circuit primaire, la profondeur d'insertion des barres de contrôle, la teneur en bore de l'eau sous pression dans le circuit primaire, etc.

Enfin, comme il est bien connu, l'état du coeur du réacteur est périodiquement redéfini, en plaçant le réacteur dans des conditions de fonctionnement déterminées et en effectuant alors des mesures spécifiques, dont certaines emploient des sondes introduites dans le coeur à cette occasion.

En fonctionnement, la puissance réelle du réacteur Prel est exprimée sous la forme d'une fraction de la puissance nominale, c'est-à-dire de la puissance maximale prévue dans le fonctionnement normal du réacteur, pour laquelle l'insertion des barres de contrôle est minimale. La puissance réelle est mesurée, par exemple, à partir des flux neutroniques indiqués par les détecteurs C1 à C6. La distorsion axiale de puissance, c'est-à-dire une valeur caractérisant la dissymétrie de la répartition de puissance réelle sera également dérivée des signaux de sortie de ces détecteurs. La position des barres de contrôle est indiquée directement par des compteurs de pas d'insertion des grappes. Une température de référence Tref est définie en fonction de la puissance demandée au réacteur. Une température moyenne du coeur Tmoy est dérivée des températures mesurées dans le circuit primaire, à l'entrée de l'eau sous pression dans le réacteur et à sa sortie.

L'invention concerne un procédé de détermination et d'évaluation de la capacité de retour rapide en puissance pour un tel réacteur.

Selon l'invention, il est procédé à la détermination et à l'évaluation de la capacité de retour rapide en puissance d'un réacteur nucléaire à eau pressurisée par le calcul d'une puissance de reprise par l'application de la formule générale :

$$Prip = Prel + \Delta P,$$

dans laquelle Prip est la puissance de reprise maximale accessible par action sur les barres de contrôle, Prel est la puissance relative fournie par le coeur, déterminée par la mesure en ligne du flux neutronique émis par le coeur et $\Delta P$ est la puissance additionnelle résultant de la réactivité potentielle de l'ensemble des barres de contrôle du réacteur quand cet ensemble passe de l'insertion observée à l'insertion minimale, $\Delta P$ se calculant par l'application de la formule :

$$\Delta P = \frac{-EG - FP - FT + EG1}{AP},$$

dans laquelle EG est l'antiréactivité qui découle de la position mesurée des grappes de régulation de puissance, en faisant intervenir la distribution axiale de puissance mesurée et l'épuisement du coeur préalablement défini, FP est un premier terme correctif correspondant à l'effet de réactivité résultant de l'erreur à la puissance réelle, telle qu'elle est mesurée, causée par la distorsion de la répartition de densité de l'eau dans le coeur du réacteur, qui est une fonction du deuxième degré de la distorsion axiale de puissance mesurée, FT est un deuxième terme correctif correspondant à l'effet de réactivité résultant de l'écart entre la température moyenne du coeur, qui est une grandeur mesurée, et la température de consigne, qui est une grandeur préétablie, EG1 est une constante d'échelle permettant de prendre en compte le fait qu'il est nécessaire de conserver, à forte puissance, des barres insérées partiellement dans le coeur pour pouvoir contrôler la température et AP est un terme permettant de traduire en variations de puissance les effets calculés en termes de réactivité.

Selon un exemple de mise en oeuvre de l'invention, le terme EG résulte de l'application de la formule suivante, en notation matricielle :

$$EG = \frac{[Pref] [A] [Pr]}{[Pref] [Pr]}$$

dans laquelle [Pref] et [Pr] sont des vecteurs représentant une distribution axiale de puissance, le premier périodiquement redéfini dans une configuration de référence, afin de représenter l'épuisement axial du coeur, tandis que le second découle de mesures en ligne effectuées par les détecteurs de flux neutroniques.

L'un et l'autre sont déterminés par l'application d'une formule du type :

$$[P] = [T]^{-1} [S]^{-1} [I]$$

dans laquelle [P] est la distribution axiale de puissance, [T] est une matrice de transfert du système de mesure, [S] est une matrice de sensibilité des détecteurs et [I] représente les sorties des détecteurs neutroniques.

Le terme [A] est une matrice diagonale représentant l'antiréactivité apportées par les grappes de contrôle de puissance et il est la somme d'autant de termes :

$$[A] = C_l[G_l]$$

qu'il y a de groupes de contrôle de puissance, $C_l$ étant l'efficacité intégrale du groupe, prédéterminée ou mesurée précédemment, et $[G_l]$ une matrice de position dont les termes sont définis directement par la position du groupe de contrôle indiquée par son compteur de pas d'insertion.

Le premier terme correctif FP correspond à l'effet de réactivité à la puissance réelle mesurée de la distorsion de la répartition de la densité de l'eau dans le coeur du réacteur, qui est une fonction du deuxième degré de la distorsion axiale de puissance mesurée, selon la formule :

$$FP = Prel\ (p3 + p4.Ao + p5.Ao^2),$$

p3, p4 et p5 étant des coefficients de dimensionnement constants.

Le deuxième terme correctif FT correspond à l'effet de réactivité résultant de l'écart entre la température moyenne du coeur, qui est une grandeur mesurée, et la température de consigne, qui est une grandeur préétablie, selon la formule :

$$FT = p6\ (Tmoy - Tref),$$

p6 étant un nouveau coefficient constant et Tmoy étant la température moyenne du coeur du réacteur obtenue à partir des températures du circuit primaire à l'entrée et à la sortie du coeur.

Après ces correctifs, la détermination de la réactivité potentielle des barres de contrôle est d'une grande précision, de sorte que le terme EG1 peut être une simple constante d'échelle.

L'invention prévoit aussi l'utilisation de la capacité de retour rapide en puissance ainsi déterminée et évaluée pour le déclenchement, par tous moyens d'une action corrective consistant à relever le niveau du bore dans le circuit primaire, ce qui entraînera un abaissement correspondant des barres de contrôle et, par suite, une augmentation de la capacité de retour rapide en puissance.

Il est bien évident que les descriptions qui précèdent n'ont été fournies qu'à titre d'exemple non limitatif et que de nombreuses variantes peuvent être imaginées sans sortir pour autant du cadre de l'invention.

## Revendications

1.  Procédé de détermination et d'évaluation de la capacité de retour rapide en puissance d'un réacteur nucléaire à eau pressurisée caractérisé en ce qu'il consiste à calculer une puissance de reprise par l'application de la formule générale :

    $$Prip = Prel + \Delta P,$$

    dans laquelle Prip est la puissance de reprise maximale accessible par action sur les barres de contrôle, Prel est la puissance relative fournie par le coeur, déterminée par la mesure en ligne du flux neutronique émis par le coeur et $\Delta P$ est la puissance additionnelle résultant de la réactivité potentielle de l'ensemble des barres de contrôle du réacteur quand cet ensemble passe de l'insertion observée à l'insertion minimale, $\Delta P$ se calculant par l'application de la formule :

$$\Delta P = \frac{-EG - FP - FT + EG1}{AP},$$

dans laquelle :
- EG est l'antiréactivité qui découle de la position mesurée des grappes de régulation de puissance, en faisant intervenir la distribution axiale de puissance mesurée et l'épuisement du coeur préalablement défini,
- FP est un premier terme correctif correspondant à l'effet de réactivité résultant de l'erreur à la puissance réelle, telle qu'elle est mesurée, causée par la distorsion de la répartition de densité de l'eau dans le coeur du réacteur, qui est une fonction du deuxième degré de la distorsion axiale de puissance mesurée,
- FT est un deuxième terme correctif correspondant à l'effet de réactivité résultant de l'écart entre la température moyenne du coeur, qui est une grandeur mesurée, et la température de consigne, qui est une grandeur préétablie,
- EG1 est une constante d'échelle permettant de prendre en compte le fait qu'il est nécessaire de conserver, à forte puissance, des barres insérées partiellement dans le coeur pour pouvoir contrôler la température et
- AP est un terme permettant de traduire en variations de puissance les effets calculés en termes de réactivité.

2. Procédé conforme à la revendication 1, caractérisé en ce que le premier terme correctif FP correspond à l'effet de réactivité résultant de l'écart à la puissance réelle, telle qu'elle est mesurée, causé par la distorsion de la répartition de la densité de l'eau dans le coeur du réacteur, qui est une fonction du deuxième degré de la distorsion axiale de puissance mesurée, selon la formule :

$$FP = Prel (p3 + p4.Ao + p5.Ao^2),$$

p3, p4 et p5 étant des coefficients de dimensionnement constants.

3. Procédé conforme à la revendication 1, caractérisé en ce que le deuxième terme correctif FT correspond à l'effet de réactivité résultant de l'écart entre la température moyenne du coeur, qui est une grandeur mesurée, et la température de consigne, qui est une grandeur préétablie, selon la formule :

$$FT = p6 (Tmoy - Tref),$$

p6 étant un coefficient constant et Tmoy étant la température moyenne du coeur du réacteur obtenue à partir des températures du circuit primaire à l'entrée et à la sortie du coeur.

4. Procédé conforme à l'une quelconque des revendications précédentes caractérisé en ce qu'il inclut l'utilisation de la puissance de reprise pour provoquer une action corrective consistant à modifier le niveau du bore en solution dans le circuit primaire.

## Claims

1. Method of determining and evaluating the capacity of a pressurized water nuclear reactor to return to power rapidly, characterized in that it consists in calculating a pick-up power by applying the general formula :

$$Prip = Prel + \Delta P$$

in which Prip is the maximum pick-up power obtainable by acting on the control bars, Prel is she relative power delivered by the core, determined by the in-line measurement of the neutron flow emitted by the core and $\Delta P$ is the additional power resulting from the potential reactivity of the

EP 0 336 338 B1

assembly of control bars of the reactor when this assembly passes from the observed insertion to the minimum insertion, $\Delta$ P being calculated by applying the formula :

$$\Delta P = \frac{-EG - FP - FT + EG1}{AP}$$

in which:

EG is the antireactivity resulting from the measured position of the power regulation clusters, involving the axial power distribution measured and the previously defined exhaustion of the core,

FP is a first corrective term corresponding to the resulting reactivity effect of the error at real power, such as it is measured, caused by the distortion of the density distribution of the water in the core of the reactor, which is a second degree function of the axial power distortion measured,

FT is a second corrective term corresponding to the resulting reactivity effect of the difference between the mean temperature of the core, which is a measured magnitude, and the reference temperature, which is a pre-established magnitude,

EG1 is a scale constant for taking into account the fact that it is necessary, at high power, to maintain bars partly inserted in the core so as to be able to control the temperature and

AP is a term for translating into power variations, the effects calculated in terms of reactivity.

**2.** Method according to claim 1, characterized in that the first corrective term FP corresponds to the resulting reactivity effect of the difference at real power, such as it is measured, caused by the distortion of the distribution of the water density in the core of the reactor, which is a second degree function of the axial power distortion measured, in accordance with the formula:

$$FP = Prel (p3 + p4.Ao + p5.Ao^2),$$

p3, p4 and p5 being constant dimensioning coefficients.

**3.** Method according to claim 1, characterized in that the second corrective term FT corresponds to the resulting reactivity effect of the difference between the mean temperature of the core, which is a measured magnitude, and the reference temperature, which is a pre-established magnitude, in accordance with the formula:

$$FT = p6 (Tmoy - Tref)$$

p6 being a constant coefficient and Tmoy being the mean temperature of the core of the reactor obtained from the temperatures of the primary circuit at the inlet and at the outlet of the core.

**4.** Method according to any one of the preceding claims, characterized in that it includes the use of the pick-up power for causing a corrective action consisting in modifying the level of the boron in solution in the primary circuit.

**Patentansprüche**

**1.** Verfahren zur Bestimmung und Abschätzung des Vermögens eines Druckwasserkernreaktors, seine Leistung schnell wieder hochzufahren,
**gekennzeichnet** durch die Berechnung der wiederhochgefahrenen Leistung nach der allgemeinen Formel:

$$Prip = Prel + \Delta P,$$

wobei Prip die maximale Wiederanfahrleistung ist, die durch Einwirkung auf die Steuerstäbe erhaltbar ist, Prel die relative vom Reaktorkern gelieferte Leistung darstellt, die durch die ununterbrochene Messung des von dem Kern emittierten Neutronenflusses bestimmt ist und P ist die zusätzliche

8

Leistung, die aus der potentiellen Reaktivität der Gesamtheit der Steuerstäbe des Reaktors resultiert, wenn diese Gesamtheit von der beibehaltenen Einführung auf die minimale Einführung überführt wird, wobei P sich berechnet aus der Anwendung der Formel:

$$\Delta P = \frac{-EG - FP - FT + EG1}{AP} \quad,$$

wobei:
- EG die Antireaktivität ist, die sich aus der gemessenen Stellung der Leistungssteuerbündel ergibt, indem die axiale Verteilung der Leistung und der vorher bestimmte Abbrand des Reaktorkerns eingerechnet werden,
- FP ein erster Korrekturterm ist, der sich aus dem Effekt der resultierenden fehlerhaften Reaktivität auf die reelle gemessene Leistung ergibt, aufgrund der Verzerrung der Dichteverteilung des Wassers im Reaktorkern, die eine Funktion zweiten Grades von der axialen Verzerrung der gemessenen Leistung ist,
- FT ein zweiter Korrekturterm ist, der dem Effekt der Reaktivität widerspricht, der sich aus dem Unterschied zwischen der mittleren Kerntemperatur, die eine gemessene Größe ist, und der Solltemperatur, die eine vorgegebene Größe ist, ergibt,
- EG1 eine Skalierungskonstante ist, die es ermöglicht, zu berücksichtigen, daß es notwendig ist, die teilweise eingeführten Stäbe bei hoher Leistung im Reaktorkern zu belassen, um die Temperatur zu steuern, und
- AP ein Ausdruck ist, der es ermöglicht, die Leistungsänderungen auf die berechneten Reaktivitätsterme zurückzuführen.

2. Verfahren nach Anspruch 1, dadurch gekennzeichnet, daß der erste Korrekturterm FP dem Effekt der Reaktivität entspricht, der sich aus der Differenz zu der gemessenen Leistung ergibt, die durch die Verzerrung der Dichteverteilung des Wassers im Reaktorkern hervorgerufen wird, die eine Funktion zweiten Grades der axialen Verzerrung der gemessenen Leistung ist, nach der Formel:

FP = Prel (p3 + p4.Ao + p5.Ao$^2$),

wobei p3, p4 und p5 Dimensionierungskonstanten sind.

3. Verfahren nach Anspruch 1, dadurch gekennzeichnet, daß der zweite Korrekturterm FT dem Effekt der Reaktivität entspricht, der sich aus der Differenz zwischen der mittleren Reaktortemperatur, die eine gemessenen Größe ist und der Solltemperatur ergibt, die eine vorbestimmte Größe ist, nach der Formel:

FT = p6 (Tmoy - Tref),

wobei p6 ein konstanter Koeffizient und Tmoy die mittlere Temperatur des Reaktorkerns ist, die ausgehend von den Temperaturen des Primärkreises am Eingang und am Ausgang des Kerns erhalten wird.

4. Verfahren nach einem der vorstehenden Ansprüche, gekennzeichnet durch die Verwendung dor Wiederanfahrleistung zur Auslösung einer Korrekturmaßnahme, die darin besteht, den Gehalt des im Primärkreis gelösten Bors zu verändern.